# EUROPÄISCHE PATENTSCHRIFT

(11) **EP 0 356 919 B1**
(45) Veröffentlichungstag und Bekanntmachung des Hinweises auf die Patenterteilung: **10.11.1993**
(21) Anmeldenummer: 89115657.2
(22) Anmeldetag: 25.08.1989
(51) Int. Cl.: B60N 3/02

(54) **Haltegriff für Fahrzeuge**
Grab-handle for vehicles
Poignée pour véhicules

(30) Priorität: 29.08.1988 DE 3829209
(43) Veröffentlichungstag der Anmeldung: 07.03.1990
(73) Patentinhaber: Gebr. Happich GmbH, D-42097 Wuppertal (DE)
(72) Erfinder: Dietz, Günter, D-5600 Wuppertal 1 (DE); Simoleit, Horst, D-5620 Neviges (DE)

(56) Entgegenhaltungen:
- DE-A- 3 616 441

## Beschreibung

Die Erfindung bezieht sich auf einen Haltegriff für Fahrzeuge, bestehend aus einem bügelförmigen Griffkörper, der einen Steg und zwei Schenkel umfaßt, wobei die Schenkelenden jeweils in ein kappenförmiges Gehäuse übergehen und der Griffkörper einen auch die kappenförmigen Gehäuse bildenden Kern aus relativ hartem Kunststoff und eine durch Umspritzen des Kerns mit relativ weichem Kunststoff gebildete, bis an die kappenförmigen Gehäuse heranreichende Umhüllung aufweist, wobei in die kappenförmigen Gehäuse an der Fahrzeugkarosserie befestigbare Lagerböcke eingreifen, die mit den kappenförmigen Gehäusen jeweils durch einen Gelenkstift verbunden sind, wobei zwischen mindestens einem der kappenförmigen Gehäuse und einem der Lagerböcke eine Feder den Griffkörper in der Nichtgebrauchslage in enger Anlage an der Fahrzeugkarosserie hält, wobei zwischen den kappenförmigen Gehäusen und den Lagerböcken Anschlagflächen ausgebildet sind, die bei der Nichtgebrauchslage des Griffkörpers gegeneinander wirken, und wobei zwischen den Anschlagflächen am kappenförmigen Gehäuse angeordnete Dämpfungspuffer vorgesehen sind.

Bei einem früher von der Anmelderin entwickelten, durch offenkundige Benutzung und aus DE-A-3 616 441 bekanntgewordenen Haltegriff der gattungsgemäßen Art, sind an den Anschlagflächen der kappenförmigen Gehäuse mit Kragen umgebene Stecköffnungen ausgebildet, in die die Steckzapfen pilzförmiger Einsatzelemente eingreifen. Hiermit wird der Zweck verfolgt, die harten Anschlaggeräusche, die beim unmittelbaren Aufeinandertreffen der Anschlagflächen der kappenförmigen Gehäuse und Lagerböcke nach dem Loslassen des Griffkörpers erfolgen, herabzumindern, indem die pilzförmigen Einsatzelemente als Dämpfungspuffer wirken. Der angestrebte Zweck wird zwar im wesentlichen erreicht, jedoch mit einem unverhältnismäßig großen Aufwand. Zunächst wird durch die mit Kragen umgebenen Stecköffnungen die Haltegriffherstellung erschwert. Ferner wird die Haltegriffherstellung verteuert, weil die pilzförmigen Einsatzelemente einer separaten Herstellung, Lagerhaltung und nicht zuletzt, einer separaten, nur von Hand durchführbaren Montage bedürfen. Schließlich hat die Praxis gezeigt, daß die pilzförmigen Einsatzelemente und damit auch die Dämpfungswirkung leicht verloren gehen können.

Der Erfindung liegt hiernach die Aufgabe zugrunde, einen Haltegriff der eingangs genannten Art hinsichtlich der Ausbildung und Anordnung der Dämpfungspuffer zu verbessern, wobei eine Herstellungs-Vereinfachung und Verbilligung ebenso angestrebt wird, wie auch eine unverlierbare Anordnung der Dämpfungspuffer.

Diese Aufgabe wird erfindungsgemäß dadurch gelöst, daß die Anschlagflächen der kappenförmigen Gehäuse jeweils eine in einer Oberfläche des Kerns an den Schenkelenden des Griffkörpers auslaufende Nut aufweisen und daß die Umhüllung des Griffkörpers sich durch die Nuten hindurch bis auf die Anschlagflächen des Gehäuses als aus der Ebene der Anschlagflächen hervortretende, Dämpfungspuffer bildende Wülste fortsetzt.

Durch die erfindungsgemäßen Maßnahmen ist ein Haltegriff mit Dämpfungspuffern geschaffen, bei dem die Dämpfungspuffer ohne jegliche Zusatzkosten, praktisch als Nebenprodukt der Griffkörperumhüllung, einstückig mit derselben ausgebildet sind. Es entfällt gegenüber dem bekannten Haltegriff die Einbringung von Stecköffnungen, die separate Herstellung von Dämpfungspuffern, sowie die Lagerhaltung und separate Montage derselben. Insbesondere ergibt sich durch die Erfindung auch eine unverlierbare Dämpfungspufferanordnung. Für die Ausbildung der einen Flußgraben für das Umhüllungsmaterial bildenden Nut in der Anschlagfläche der kappenförmigen Gehäuse ist lediglich eine einmalige, relativ geringfügige Anpassung der für die Herstellung des Kerns erforderlichen Spritzgußwerkzeuge erforderlich und für die Ausbildung der die Dämpfungspuffer bildenden Wülste ist lediglich eine einmalige, relativ geringfügige Anpassung der für die Bildung der Umhüllung vorzusehenen Spritzgußwerkzeuge nötig.

Da sich das Umhüllungsmaterial beim Umspritzen des Kerns nicht notwendigerweise mit diesem stoffschlüssig verbindet, ist es von Vorteil, wenn in Ausgestaltung der Erfindung vorgesehen wird, die Nuten ganz oder zumindest bereichsweise hinterschnitten auszubilden, um auf diese Weise eine zuverlässige Festlegung der Wülste am Kern sicherzustellen.

Zur Vereinfachung der Haltegriffherstellung trägt es bei, wenn gemäß einer Weiterbildung der Erfindung vorgesehen wird, daß die Nuten an der mit der offenen Seite der kappenförmigen Gehäuse zusammenfallenden Oberfläche des Kerns frei auslaufen.

Vorteilhafterweise kann ferner vorgesehen sein, daß sich die Nuten jeweils nur über einen Teilbereich der Anschlagfläche der kappenförmigen Gehäuse, die Wülste hingegen über die gesamte Anschlagfläche derselben hinweg, und zwar jeweils senkrecht zum Gelenkstift ausgerichtet, erstrecken.

Ein Ausführungsbeispiel der Erfindung wird im folgenden anhand der Zeichnung näher erläutert. Es zeigen
- Fig. 1: einen Haltegriff in Ansicht,
- Fig. 2: einen Schnitt II-II nach Fig. 1
- Fig. 3: den Griffkörper des Haltegriffs nach Fig. 1, bereichsweise mit einer Umhüllung versehen,
- Fig. 4: einen Schnitt folgend der Linie IV-IV nach Fig. 3 und
- Fig. 5: eine Ansicht gemäß Pfeilrichtung V.

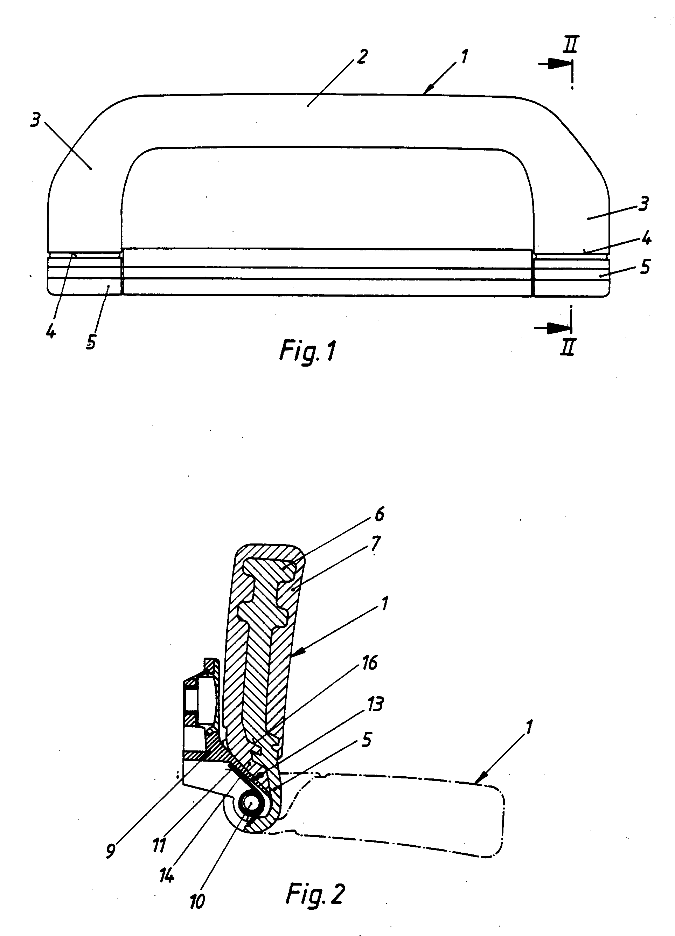

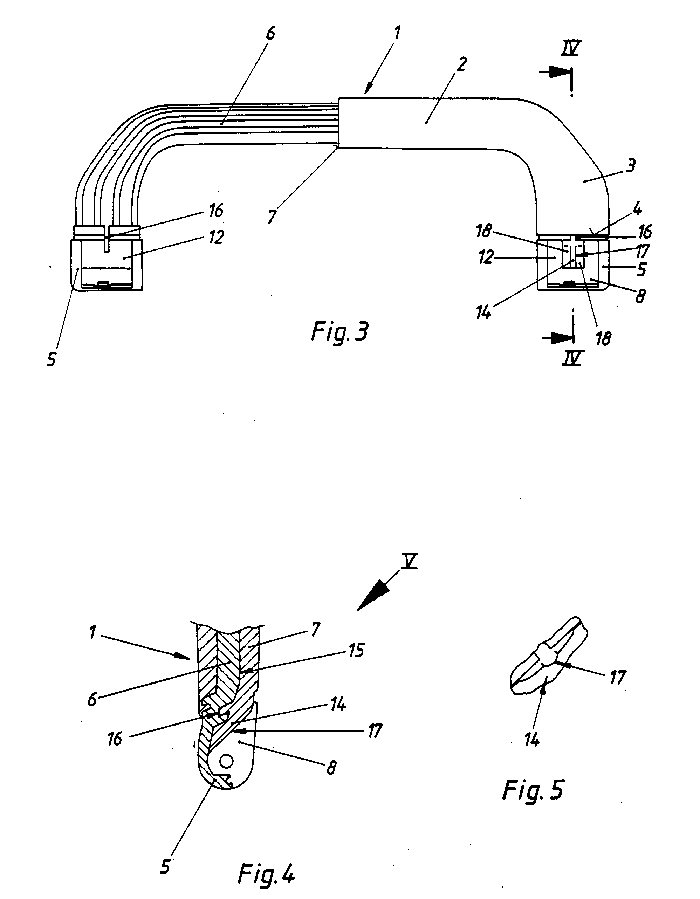

Der Haltegriff besteht aus einem bügelförmigen Griffkörper 1, der einen Steg 2 und zwei Schenkel 3 umfaßt. Die Schenkelenden 4 gehen jeweils in ein kappenförmiges Gehäuse 5 über. Der Griffkörper 1 wird gebildet aus einem Kern 6, der aus einem Kunststoff-Spritzgußteil mit den daran einstückig angeformten kappenförmigen Gehäusen 5 sowie aus einer, um den Kern 6 bis an die Schenkelenden 4 herumgespritzten Umhüllung 7 besteht. Während für die Bildung des Kerns 6 mit den kappenförmigen Gehäusen 5 ein relativ hartes thermoplastisches Kunststoffmaterial verwendet wird, wird für die Umhüllung 7 ein relativ weiches, grifffreudiges thermoplastisches Kunststoffmaterial eingesetzt. Der Kern 6 weist eine durch Rippen (vgl. Fig. 2, 3) gebildete Profilierung auf, so daß sich zwischen Kern 6 und Umhüllung 7 eine verwürgungsfreie Verbindung ergibt.

In die Öffnung 8 der kappenförmigen Gehäuse 5 greifen an der nicht gezeigten Fahrzeugkarosserie befestigbare Lagerböcke 9 (Fig. 2) einendig ein, die mit den kappenförmigen Gehäusen 5 jeweils durch einen Gelenkstift 10 verbunden sind. Zwischen zumindest einem der kappenförmigen Gehäuse 5 und einem der Lagerböcke 9 ist eine den Griffkörper 1 belastende Feder 11 angeordnet, die bestrebt ist, den Griffkörper 1 aus seiner in Fig. 2 gestrichelt dargestellten Gebrauchslage in die in Fig. 2 mit starken Linien dargestellte Nichtgebrauchslage zurückzuführen. Die Zurückführung des Griffkörpers 1 erfolgt, nach dem Loslassen desselben, automatisch. Die kappenförmigen Gehäuse 5 weisen jeweils eine Anschlagfläche 12 und die Lagerböcke 9 eine damit in der Nichtgebrauchslage des Griffkörpers zusammenwirkende Anschlagfläche 13 auf.

Damit die Anschlagflächen 12, 13 beim Loslassen des Griffkörpers 1 durch die Kraft der Rückstellfeder 11 nicht mit einem harten Knallgeräusch aufeinandertreffen, ist vorgesehen, jeder Anschlagfläche 12 der kappenförmigen Gehäuse 5 mit einem Dämpfungspuffer 14 auszurüsten, der die Ebene der Anschlagfläche 12 überragt und unmittelbar mit der Anschlagfläche 13 jedes Lagerbocks 9 zusammenwirkt. Für die Anordnung und Bildung der Dämpfungspuffer ist vorgesehen, daß die Anschlagflächen 12 der kappenförmigen Gehäuse 5 jeweils eine in einer Oberfläche 15 des Kerns 6, die mit der offenen Seite des kappenförmigen Gehäuses 5 zusammenfällt, an den Schenkelenden 4 des Griffkörpers 1 auslaufende Nut 16 aufweisen. Durch die Nut 16 kann beim Umspritzen des Kern 6 das Umhüllungsmaterial, das normalerweise exakt an den Schenkelenden 4 endet, hindurchfließen und auf jeder Anschlagfläche 12 einen Dämpfungspuffer in Form einer Wulst 17 mit Wulstlappen 18 bilden. Jeder Wulst 17 erstreckt sich über die volle Länge der Anschlagflächen 12 und ist senkrecht zum Gelenkstift 10 ausgerichtet. Jede Nut 16 ist hinterschnitten oder, wie aus Fig. 2 und 4 ersichtlich, sacklochartig vertieft ausgebildet, so daß die Dämpfungspuffer 14 bzw. Wülste 17 fest am Kern 6 bzw. an den Anschlagflächen 12 durch formschlüssige Verbindung verankert sind.

## Patentansprüche

1. Haltegriff für Fahrzeuge, bestehend aus einem bügelförmigen Griffkörper (1), der einen Steg (2) und zwei Schenkel (3) umfaßt, wobei die Schenkelenden (4) jeweils in ein kappenförmiges Gehäuse (5) übergehen und der Griffkörper (1) einen auch die kappenförmigen Gehäuse (5) bildenden Kern (6) aus relativ hartem Kunststoff und eine durch Umspritzen des Kerns (6) mit relativ weichem Kunststoff gebildete, bis an die kappenförmigen Gehäuse (5) heranreichende Umhüllung (7) aufweist, wobei in die kappenförmigen Gehäuse (5) an der Fahrzeugkarosserie befestigbare Lagerböcke (9) eingreifen, die mit den kappenförmigen Gehäusen (5) jeweils durch einen Gelenkstift (10) verbunden sind, wobei zwischen mindestens einem der kappenförmigen Gehäuse (5) und einem der Lagerböcke (9) eine Feder (11) den Griffkörper (1) in der Nichtgebrauchslage in enger Anlage an der Fahrzeugkarosserie hält, wobei zwischen den kappenförmigen Gehäusen (5) und den Lagerböcken (9) Anschlagflächen (12, 13) ausgebildet sind, die bei der Nichtgebrauchslage des Griffkörpers (1) gegeneinanderwirken, und wobei zwischen den Anschlagflächen (12, 13) am kappenförmigen Gehäuse (5) angeordnete Dämpfungspuffer (14) vorgesehen sind, dadurch gekennzeichnet, daß die Anschlagflächen (12) der kappenförmigen Gehäuse (5) jeweils eine in einer Oberfläche (15) des Kerns (6) an den Schenkelenden (4) des Griffkörpers (1) auslaufende Nut (16) aufweisen und daß die Umhüllung (7) des Griffkörpers (1) sich durch die Nuten (16) hindurch bis auf die Anschlagflächen (12) des Gehäuses (5) als aus der Ebene der Anschlagflächen (12) hervortretende, Dämpfungspuffer (14) bildende Wülste (17) fortsetzt.

2. Haltegriff nach Anspruch 1, dadurch gekennzeichnet, daß die Nuten (16) ganz oder zumindest bereichsweise hinterschnitten ausgebildet sind.

3. Haltegriff nach Anspruch 1 oder 2, dadurch gekennzeichnet, daß die Nuten (16) an der mit der offenen Seite der kappenförmigen Gehäuse (5) zusammenfallenden Oberfläche (15) des Kerns (6) frei auslaufen.

4. Haltegriff nach einem oder mehreren der Ansprüche 1 bis 3, dadurch gekennzeichnet, daß sich die Nuten (16) jeweils nur über einen Teilbereich der Anschlagfläche (12) der kappenförmigen Gehäuse (5), die Wülste (17) hingegen über die gesamte Anschlagflächen (12) derselben hinweg, und zwar jeweils senkrecht zum Gelenkstift (10) ausgerichtet, erstrecken.

## Claims

1. A handle for vehicles, comprising a curved body (1) having a web (2) and two arms (3), the end (4) of each arm merging into a cap-like casing (5) and the body (1) comprising a core (6) forming the cap-like casing (5) and made of relatively hard plastics material and a cover (7) made of relatively soft plastics material and extending into the cap-like casing (5),in which bearing blocks (9) on the vehicle body, each connected to the casing (5) by a pivot pin (10), engage the casing (5), and a spring (11) disposed between at least one casing (5) and one block (9) holds the body (1) closely adjacent the vehicle body when in the inoperative position, and abutment surfaces (12, 13) are formed between the casing (5) and the blocks (9) and press against one another when the body (1) is in the inoperative position, and shock-absorbing buffers (14) are disposed between the abutment surfaces (12, 13) on the casing (5), characterised in that the abutment surfaces (12) on the casing (5) each have a groove (16) extending outwards from the ends (4) of the arms of the body (1) on a surface (15) of the core (6), and the cover (7) of the body (1) is continued by beads (17) which form shock-absorbing buffers (14) and extend through the grooves (16) as far as the abutment surfaces (12) of the casing (5) and from the plane of the abutment surfaces (12).

2. A handle according to claim 1, characterised in that the grooves (16) are undercut, either entirely or at least in portions.

3. A handle according to claim 1 or 2, characterised in that the grooves (16) project on that surface (15) of the core (6) which coincides with the open side of the casing (5).

4. A handle according to one or more of claims 1 to 3, characterised in that the grooves (16) extend over only a part of the abutment surface (12) of the casing (5), whereas the beads (17) extend over the entire abutment surfaces (12) thereof, at right angles to the pivot pin (10).

## Revendications

1. Poignée pour véhicules, constituée par un corps de saisie en forme d'étrier (1) comprenant une branche transversale (2) et deux bras (3), les extrémités (4) des bras étant chacune prolongée par un logement en forme de capuchon (5) et le corps de saisie (1) comprenant un noyau (6) en matière synthétique relativement dure formant le logement en forme de capuchon (5) et une enveloppe (7) parvenant jusqu'au logement en forme de capuchon (5) et constituée par moulage d'une matière synthétique relativement molle autour du noyau, des paliers de support (9) pouvant être fixés à la carrosserie du véhicule pénétrant dans le logement en forme de capuchon (5), paliers qui sont respectivement reliés aux logements en forme de capuchons (5) par une tige d'articulation (10), un ressort (11) monté entre l'un au moins des logements en forme de capuchons (5) et l'un au moins des paliers de support (9) maintenant le corps de saisie (1) quand il est position de non utilisation à l'état appliqué étroitement contre la carrosserie du véhicule, des surfaces de butée (12, 13) étant constituées entre les logements en forme de capuchons (5) et les paliers de support (9), surfaces qui s'appliquent l'une contre l'autre dans la position de non utilisation du corps de saisie (1), et des tampons d'amortissement (14) étant prévus et disposés entre les surfaces de butée (12, 13) du logement en forme de capuchon (5), caractérisée en ce que les surfaces de butée (12) des logements en forme de capuchons (5) comprennent chacune une rainure (16) constituée dans une surface (15) du noyau (6) aux extrémités (4) des bras du corps de saisie (1) et en ce que l'enveloppe (7) du corps de saisie se prolonge au-delà des rainures (16) jusqu'aux surfaces de butée (12) du logement (5) sous forme de bourrelets (17) formant des tampons d'amortissement (14) faisant saillie du plan des surfaces de butée (12).

2. Poignée selon la revendication 1, caractérisée en ce que les rainures (16) sont constituées en contre-dépouille en totalité ou au moins en partie.

3. Poignée selon la revendication 1 ou 2, caractérisée en ce que les rainures (16) s'ouvrent librement sur la surface (15) du noyau (6) qui coïncide avec le côté ouvert des logements en forme de capuchons (5).

4. Poignée selon l'une ou plusieurs des revendications 1 à 3, caractérisée en ce que les rainures (16) ne s'étendent respectivement que sur une région partielle de la surface de butée (12) des logements en forme de capuchons (5) , alors que les bourrelets (17) s'étendent par contre sur la totalité des surfaces de butée (12) en étant orientés respectivement perpendiculairement à la tige d'articulation (10).
